# EUROPEAN PATENT APPLICATION

(11) **EP 4 401 222 A2**
(43) Date of publication of application: **17.07.2024**
(21) Application number: 23159169.4
(22) Date of filing: 28.02.2023
(51) Int. Cl.: H01M 50/247, H01M 50/569, H01M 10/42, H01M 50/204, H01M 50/256, H01M 50/269, H01M 50/284, H01M 50/298

(54) **PORTABLE POWER STORAGE SYSTEM AND METHOD**

(30) Priority: 10.01.2023 US 202318095444
(71) Applicant: Videndum Production Solutions Inc., Shelton, CT 06762 (US)
(72) Inventor: PASKO, David, Middlebury CT (US); HUTTON, Andrew, Dunstable (GB); ROSENFELD, Benjamin, Shelton CT (US); MARKLAND, Jim, Stratford CT (US); SINCIC, Andrew John, Canoga Park CA (US); PINHEIRO, Jason, Newtown CT (US); MRAZIK, Michael, Prospect CT (US); WERENSKJOLD, Tyler, Wilton CT (US); PATEL, Akash, Shelton CT (US); ADVENTO, Mark, Santa Clarita CA (US)
(74) Representative: ATIP

(57) **Abstract**

The present disclosure describes a power storage system and, more particularly, a portable power storage system. The portable power storage system may include a movable cart, a power storage module, and an electrical system electrically connected to the power storage module and configured to output electrical power. In some instances, the power storage system may further include a power generation module.

## Description

### CROSS REFERENCE TO RELATED APPLICATIONS

This application claims priority to U.S. Provisional Patent Application No. 63/334,025, filed on April 22, 2022, and which is hereby incorporated by reference in its entirety.

### FIELD OF THE DISCLOSURE

The field of disclosure relates generally to a power storage system and, more particularly, to a portable power storage system with a rechargeable battery.

### BACKGROUND

Power generation and storage devices are constantly evolving as the industry seeks to produce devices with increased power output and better fuel efficiencies, all while reducing the devices' impact on the environment. Currently, fossil fuel-based generators are the most prominent power generation and storage devices for use in areas where grid electricity is not readily available.

However, fossil fuel-based generators have several major drawbacks and in some industries those drawbacks have major financial and work product impacts. In a non-exhaustive list, fossil fuel-based generators produce exhaust that is harmful to the environment and dangerous to humans and animals when used within confined spaces, the generators are loud and may need to be placed away from the working area, the generators require regular maintenance, the generators may produce "dirty" power that may damage some equipment, and the generators are not easily portable once hooked up with enough equipment to transform output electricity into a safe input for some equipment (e.g., higher end equipment). "Dirty" power is defined as "an abnormality in the power quality that is being delivered to a system" and "these abnormalities can include low power factor, voltage variations, frequency variations, and surges." (See https://www.tesengineering.com/electrical-engineering-what-is-dirty-power/).

In some specific industries, for example, events (e.g., fair, concerts) or production sets, fossil fuel-based generators have additional drawbacks to producing harmful chemicals. For example, given the noise output of a fossil fuel-based generator, the generator must be situated at a location far enough away from the event or production set that the noise does not impact the performance (e.g., fair, concert, speech, or taping of a movie/show). The added distance requires additional cabling and equipment to span that distance, which may be several hundred feet (e.g., 400 feet). It is not unusual for production sets, for example, to spend thousands of dollars in cabling per generator to deliver power from the remotely positioned generator to the production set. Despite the distance, production companies may still filter out the noise after filming.

In addition to the distance, higher end equipment including, but not limited to, speakers, lights, cameras, microphones, computers and the like require quality power inputs in order to function at a high performance and without damaging the equipment. Fossil fuel-based generators have long produced "dirty" power that routinely requires additional equipment to filter and clean the power before it is introduced into, for example, the production equipment. The additional filtering equipment increases the production costs, lengthens the set-up times, and severely reduces the portability of the generator.

Therefore, there is a need in the art for a portable, low cost, and quiet power storage system.

### BRIEF DESCRIPTION

The present disclosure describes a power storage system and, more particularly, a portable power storage system. The portable power storage system may include a movable cart, a power storage module, and an electrical system electrically connected to the power storage module and configured to output electrical power. In some instances, the power storage system may further include a power generation module.

In some embodiments, a power storage system may include a movable cart, a rechargeable battery, and an electronic system. The electronic system may include at least one output electrical receptacle and at least one input electrical receptacle in electrical communication with the rechargeable battery. In some instances, the rechargeable battery and the electronic system may be mounted with respect to the movable cart.

The electronic system may include a power supply electrically connected to a power inlet and to the rechargeable battery, the power supply may be configured to recharge the rechargeable battery. Electronic system may also include a DC module electrically connected to the rechargeable battery and a DC power outlet and an AC inverter electrically connected to the rechargeable battery and an AC power outlet. The AC inverter may be configured to convert DC voltage to AC voltage. The electronic system may also include a controller connected to at least the power supply, the DC module, the AC module, and the rechargeable battery. The at least one output electrical receptacle may be selected from the group including a DC receptacle, an AC receptacle, a USB-A, a USB-C, an HDMI, a stage pin connector, an XLR connector, and combinations thereof. The at least one input electrical receptacle is selected from the group including a DC receptacle, an AC receptacle, an electric vehicle charging connector, and combinations thereof.

The movable cart may include a support frame including a base, a plurality of sidewalls mounted vertically with respect to the base, a lid mounted with respect to the plurality of sidewalls, a set of wheels mounted with respect to the base, and at least one handle mounted with respect to at least one of the plurality of sidewalls. The movable cart may have a footprint that is configured to be received by an existing transportation vehicle. For example, the movable cart may define a width of about 75 centimeters (about 29.53 inches). The movable cart may include a display screen in electrical communication with at least the electronic system. In some instances, the rechargeable battery, the electronic system, and the display screen may be mounted with respect to the support frame of the movable cart. The support frame of the movable cart may be configured to receive at least two rechargeable battery systems. The support frame may include two louvers and at least one fan. The louvers may be oppositely positioned and the at least one fan may be positioned between the two louvers.

The support frame may include at least one of a heat sink and/or a fan that may be selectively positioned to capture and/or direct heat relative to the rechargeable battery.

In some examples, the rechargeable battery may be selected from the group including a sodium-based battery, lithium-ion battery, lead-acid battery, nickel-cadmium battery, nickel-metal hydride battery, and combinations thereof. The sodium-based battery may be selected from the group including a molten sodium battery and a sodium-ion battery.

In some embodiments, a shipping container for the power storage system, as described herein, may include a base, a plurality of sidewalls mounted vertically with respect to the base, and a lid mounted with respect to the plurality of sidewalls, thereby defining an enclosure having an open volume. In some examples, at least one of the plurality of sidewalls may be removable. The shipping container may also include a ramp positionable between an area relative to at least one of the plurality of sidewalls, and to an area relative to the removable sidewall. The power storage system may include a set of wheels and may be loaded and/or unloaded into/from the open volume of the enclosure using the ramp. The loaded power storage system may be closed within the enclosure by the removable sidewall and the ramp may be mounted with respect to at least one of the plurality of sidewalls.

In yet another embodiment, a production equipment assembly may include a production equipment that is electrically powered by the power storage system, as described herein. The power storage system may be positioned within about 200 feet relative to the production equipment. In some instances, the power storage system may be positioned within about 10 feet relative to the production equipment.

In another embodiment, a method of setting up and operating a production equipment includes, electrically connecting the production equipment to the power storage system, as described herein, and providing power to the production equipment such that the production equipment may be capable of being operated.

In yet another embodiment, a power storage system may include a movable cart, a sodium-based battery, and an electronic system. The movable cart may include a support frame that may include a base, a plurality of sidewalls mounted vertically with respect to the base, and a lid mounted with respect to the plurality of sidewalls. The sodium-based battery may be mounted with respect to the base of the movable cart. The support frame may include a first pair of wheels positioned along a first axis and mounted with respect to the base, and a second pair of rotatable wheels positioned along a second axis and mounted with respect to the base and opposite from the first pair of wheels. The support frame may also include a horizonal handle mounted with respect to one of the plurality of sidewalls, and two vertical handles mounted with respect to at least one of the plurality of sidewalls and opposite from the horizontal handle.

The electronic system may include at least one input electrical receptacle and at least one output receptacle mounted with respect to the movable cart and in electrical communication with the sodium-based battery. The electronic system may include a power supply electrically connected to a power inlet and to the sodium-based battery, the power supply may be configured to recharge the sodium-based battery. The electronic system may include a DC module electrically connected to the sodium-based battery and an AC inverter electrically connected to the sodium-based battery, the AC inverter may be configured to convert DC voltage to AC voltage. The electronic system may also include a controller connected to at least the power supply, the DC module, the AC module, and the sodium-based battery. The electronic system may include a display screen electrically connected to the controller and configured to display at least one electrical characteristic of the system. The at least one output electrical receptacle may be selected from the group including a DC receptacle, an AC receptacle, a USB-A, a USB-C, an HDMI, a stage pin connector, an XLR connector, and combinations thereof. The at least one input electrical receptacle may be selected from the group including a DC receptacle, an AC receptacle, an electric vehicle charging connector, and combinations thereof.

As used herein, "cart" refers to any portable structure, unless stated otherwise, including but not limited to, a four-wheeled dolly, a two-wheeled dolly, a trailer, a hand truck, and combinations thereof.

As used herein, "a", "an", and "the" refer to both singular and plural referents unless the context clearly dictates otherwise.

As used herein, the term "about" refers to a measurable value such as a parameter, an amount, a temporal duration, and the like and is meant to include variations of +/- 15% or less, preferably variations of +/- 10% or less, more preferably variations of +/- 5% or less, even more preferably variations of +/- 1% or less, and still more preferably variations of +/- 0.1 % or less of and from the particularly recited value, in so far as such variations are appropriate to perform in the invention described herein. Furthermore, it is also to be understood that the value to which the modifier "about" refers is itself specifically disclosed herein.

As used herein, spatially relative terms, such as "beneath", "below", "lower", "above", "upper", "front", "back", "side", "left", "right", "rear", and the like, are used for ease of description to describe one element or feature's relationship to another element(s) or feature(s). It is further understood that the terms "front", "back", "left", and "right" are not intended to be limiting and are intended to be interchangeable, where appropriate. Further, it should be noted that the terms "first," "second," and the like herein do not denote any order, quantity, or relative importance, but rather are used to distinguish one element from another.

As used herein, the terms "comprise(s)", "comprising", and the like, specify the presence of stated features, integers, steps, operations, elements, and/or components, but do not preclude the presence or addition of one or more other features, integers, steps, operations, elements, components, and/or groups thereof.

As used herein, the terms "configure(s)", "configuring", and the like, refer to the capability of a component and/or assembly, but do not preclude the presence or addition of other capabilities, features, components, elements, operations, and any combinations thereof.

Chemical compounds are described using standard nomenclature. For example, any position not substituted by any indicated group is understood to have its valency filled by a bond as indicated, or a by hydrogen atom.

All ranges disclosed herein are inclusive of the endpoints, and the endpoints are independently combinable with each other. Each range disclosed herein constitutes a disclosure of any point or sub-range lying within the disclosed range.

All methods described herein can be performed in any suitable order unless otherwise indicated herein or otherwise clearly contradicted by context. The use of any and all examples, or exemplary language (e.g., "such as"), is intended merely to better illustrate the invention and does not pose a limitation on the scope of the invention or any embodiments unless otherwise claimed.

Any combination or permutation of features, functions and/or embodiments as disclosed herein is envisioned. Additional advantageous features, functions and applications of the disclosed systems, methods and assemblies of the present disclosure will be apparent from the description which follows, particularly when read in conjunction with the appended figures. All references listed in this disclosure are hereby incorporated by reference in their entireties.

### BRIEF DESCRIPTION OF THE DRAWINGS

Features and aspects of embodiments are described below with reference to the accompanying drawings, in which elements are not necessarily depicted to scale.

Exemplary embodiments of the present disclosure are further described with reference to the appended figures. It is to be noted that the various features, steps and combinations of features/steps described below and illustrated in the figures can be arranged and organized differently to result in embodiments which are still within the scope of the present disclosure.

To assist those of ordinary skill in the art in making and using the disclosed assemblies, systems and methods, reference is made to the appended figures, wherein:
Fig. 1 depicts a perspective view of a power storage system, according to the present disclosure;
Fig. 2 depicts a side view of a power storage system including a single rechargeable battery, according to the present disclosure;
Fig. 3 depicts a side view of a power storage system including a pair of rechargeable batteries, according to the present disclosure;
Fig. 4 depicts a front view of a power storage system, according to the present disclosure;
Fig. 5 depicts a front view of a power storage system, according to the present disclosure;
Fig. 6 illustrates a block diagram of a power panel of a power storage system, according to the present disclosure;
Fig. 7 depicts a top view of an electronic system of a power storage system, according to the present disclosure;
Fig. 8A illustrates a power block diagram of a power storage system, according to the present disclosure;
Fig. 8B illustrates a signal block diagram of a power storage system according to the present disclosure;
Fig. 9 depicts a back view of a power storage system, according to the present disclosure;
Fig. 10 depicts a perspective view of a power storage system, according to the present disclosure;
Fig. 11 depicts a side view of a power storage system, according to the present disclosure;
Fig. 12A illustrates a side view of air flow moving longitudinally within a power storage system, according to the present disclosure;
Fig. 12B illustrates a back view of air flow moving tangentially within a power storage system, according to the present disclosure;
Fig. 13 depicts a power storage system in relation to an average person's height, according to the present disclosure;
Fig. 14 depicts a front view of a storage box assembly configured for a power storage system, according to the present disclosure;
Fig. 15 depicts a perspective view of a storage box assembly including a ramp mounted with respect to a sidewall of the storage box, according to the present disclosure; and
Fig. 16 depicts a side view of a storage box assembly including a ramp mounted with respect to a sidewall of the storage box, according to the present disclosure.

### DETAILED DESCRIPTION

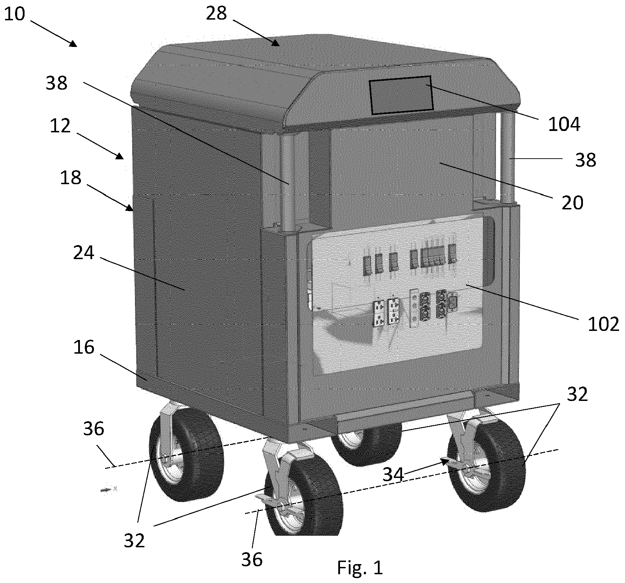

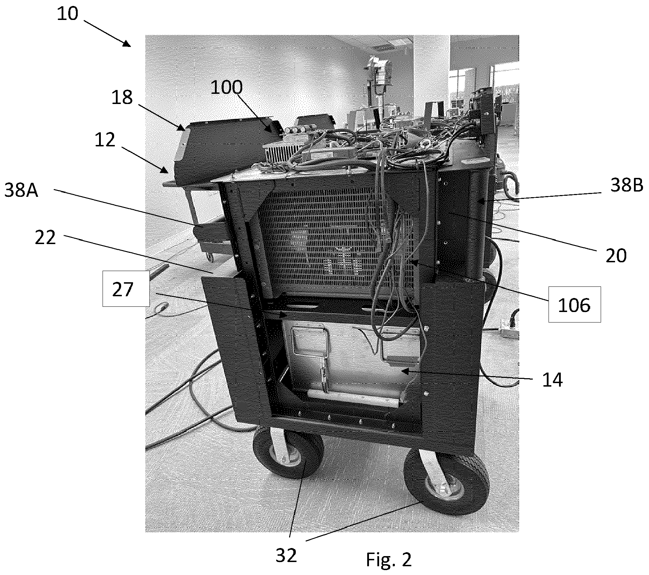

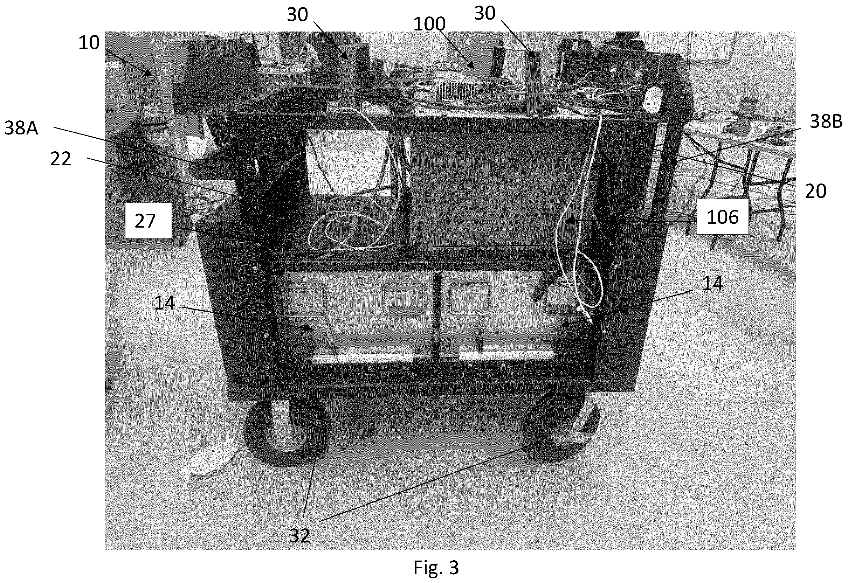

Referring to the figures, Figs. 1-3 depict a power storage system 10. Power storage system 10 includes movable cart 12, electronic system 100, and rechargeable battery 14. Electronic system 100 and rechargeable battery 14 may be mounted with respect to movable cart 12. Electronic system 100 is in electrical communication with rechargeable battery 14. Power storage system 10 may include one rechargeable battery 14. Power storage system 10 may include a plurality of rechargeable batteries 14. For example, Fig. 2 depicts power storage system 10 with one rechargeable battery 14. Fig. 3 depicts power storage system 10 with two rechargeable batteries 14. Although Figs. 2 and 3 depict power storage system 10 with one and two batteries 14, respectively, it should be understood that power storage system 10 is scalable to accommodate a plurality of batteries 14, based on the desired need. Therefore, the description of power storage system 10 is not limited to a specific number of batteries 14, unless stated otherwise. Moreover, singular use of "rechargeable battery" when describing various systems/components of power storage system 10 does not limit the discussion to one battery, unless stated otherwise.

Rechargeable battery 14 may refer to lithium-ion (Li-ion) batteries, sodium-based batteries (e.g., sodium-ion batteries, molten sodium batteries), lead-acid batteries, nickel-cadmium (NiCd) batteries, nickel-metal hydride (NiMH) batteries, and combinations thereof. For example, a power storage system including two rechargeable batteries 14 may include two different battery technologies, depending on desired function and need. Two or more rechargeable batteries 14 may be in series and/or parallel.

Power storage system 10 may be configured to have an output power that meets a desired need. Power storage system 10 may be configured to deliver "clean" output power to ensure the equipment connected to the system is not damaged. For example, power storage system 10 may deliver output power in pure sinewave. Power storage system 10 is scalable depending on the industry of use and size restrictions of the system 10. In a non-limiting example, power storage system 10 may be configured to deliver output power in the range of about 1 watt to about 10,000 watts. For example, power storage system 10 may be configured to deliver output power in the range of about 1 watt to about 6,000 watts. The output power of power storage system 10 may dictate how many rechargeable batteries 14 are required and the footprint of movable cart 12. Power storage system 10 may have a capacity of about 1 kWh to about 2 MWh. For example, a capacity of about 9 kWh, 18 kWh, 27 kWh, 36 kWh, 45 kWh, 54 kWh, and 220 kWh. The capacity of power storage system 10 may dictate how many rechargeable batteries 14 are required and the footprint of movable cart 12.

Movable cart 12 may include base 16 and body 18. Body 18 may enclose rechargeable battery 14 and electronic system 100. Movable cart 12 may be scalable to fit a desired number of rechargeable batteries 14. For example, base 16 and body 18 of movable cart 12 may be scalable to fit a desired number of rechargeable batteries 14. Base 16 may define the footprint of movable cart 12 and the desired number of rechargeable batteries 14 may fit within a desired footprint. Body 18 may be constructed to reduce (or eliminate) water (and other debris) from entering power storage system 10. Body 18 may be manufactured from a variety of materials including, metal (e.g., sheet metal), plastic, and combinations thereof. Body 18 may be assembled using features incorporated with the various components, welding, adhesives, fasteners (e.g., screws, bolts, rivets), and combinations thereof. Movable cart 12 may also include one or more wheels/casters 32. The one or more wheels/casters 32 may be mounted with respect to base 16, either directly or indirectly. As used herein, wheels, casters and/or another related term may be used interchangeably, without departing from the spirit/scope of this disclosure. Movable cart 12 may include at least two wheels 32. For example, two wheels 32 may be positioned along a shared axis 36. In some embodiments, movable cart 12 may include four wheels 32, each positioned in proximity to a corner of base 16. Each set of two wheels 32 may be positioned along a shared axis 36 (e.g., see Fig. 1). At least one wheel 32 may include wheel lock 34. In some instances, at least two wheels 32 may include wheel locks 34. Power storage system 10 may include a grounding lug 19 to enable grounding to the earth.

Body 18 may further define at least one outer wall and a lid to aid in enclosing rechargeable battery 14 and electronic system 100. The at least one outer wall and the lid may include gaskets to reduce (or eliminate) water (and other debris) from entering power storage system 10. For example, body 18 may define a plurality of outer walls (e.g., four outer walls) and a lid. The outer walls may be mounted with respect to base 16. The outer walls may include a variety of components/features depending on the desired size and configuration of power storage system 10, as discussed in more detail throughout this disclosure.

Outer walls may include a front wall, a back wall, and two sidewalls, which may be connected to the front and back walls. For example, front wall 20 and back wall 22 may be oppositely positioned from each other. In some instances, front and back wall 20, 22 may be parallel to each other. Positioned between front and back wall 20, 22 may be two sidewalls (e.g., left sidewall 24 and right sidewall 26). Left and right sidewalls 24, 26 may be oppositely positioned from each other. In some instances, left and right sidewall 24, 26 may be parallel to each other. In some instances, left and right sidewall 24, 26 may be substantially perpendicular to front and back wall 20, 22. The perimeter of the outer walls, when assembled, may resemble base 16. Body 18 may further include barrier 27 mounted within the outer walls and between rechargeable battery 14 and electronic system 100. Barrier 27 may separate electronic system 100 from rechargeable battery 14, for example, in the event of battery discharge and/or thermal runaway from rechargeable battery 14. At least a portion of barrier 27 may be manufactured from a fire-retardant material (e.g., metal, cement board, calcium silicate board).

Lid 28 may at least partially engage with one or more of the outer walls and provide a covering to movable cart 12. For example, lid 28 may at least partially engage with front wall 20 and back wall 22, either directly or indirectly. In some examples, lid 28 may at least partially engage with left sidewall 24 and right sidewall 26, either directly or indirectly. Body 18 may further include one or more support structures 30 to support lid 28. Support structures 30 may be arched to accommodate lid 28. Support structures 30 may be mounted with respect to left and right sidewalls 24, 26. Lid 28 may at least partially engage with one or more of the following including, front wall 20, back wall 22, support structures 30, left sidewall 24, and/or right sidewall 26, either directly or indirectly.

Wheels 32 may be selected based on the desired operating location. For example, surface that are hard and mostly free of obstacles/debris (e.g., asphalt, concrete) may benefit from solid wheels 32 (e.g., rubber, plastic). Surfaces that are uneven and include debris (e.g., off-road conditions), may benefit from pneumatic wheels (e.g., tubed, or tubeless tires). In some instances, a combination of wheels 32 may be desired. Regardless of wheel 32 design, wheels 32 may swivel and/or may be fixed in a direction. In some instances, a power assisted device may be attached, either directly or indirectly, with one or more wheels 32 so as to assist (or entirely control) movement of movable cart 12.

Movable cart 12 may include one or more handles 38A, 38B. Handles 38A, 38B may be strategically positioned around movable cart 12 so as to facilitate ease of maneuverability and portability. For example, at least one handle 38A may be mounted with respect to back wall 22. At least one handle 38B may be mounted with respect to front wall 20. In some instances, at least two handles 38A, 38B may be mounted with respect to either front wall 20 and/or back wall 22. Handles 38A, 38B may be mounted horizontally and/or vertically. For example, handle 38A may be mounted horizontally with respect to back wall 22 and two handles 38B may be mounted vertically with respect to front wall 20. Handle 38A may be mounted with respect to one or more features of back wall 22. For example, handle 38A may at least partially be mounted with respect to recess 23 of back wall 22. Handle 38A may be horizontally mounted with respect to recess 23 of back wall 22. Handle 38B may be mounted with respect to one or more features of front wall 20. For example, handle 38B may at least partially be mounted with respect to recess 21 of front wall 20. Handle 38B may be vertically mounted with respect to recess 21 of front wall 20. In some examples, recess 21 may at least partially relate to lid 28. Handles 38A, 38B may be sized so a user may easily engage with and move movable cart 12. Handles 38A, 38B may include various features including, a hand brake (not shown), which activates wheel lock 34, movement controls to control power assisted device (not shown), grips (e.g., rubber, foam, plastic), and combinations thereof. Handles 38A, 38B may be manufactured from metal, plastic, rubber, wood, and related materials.

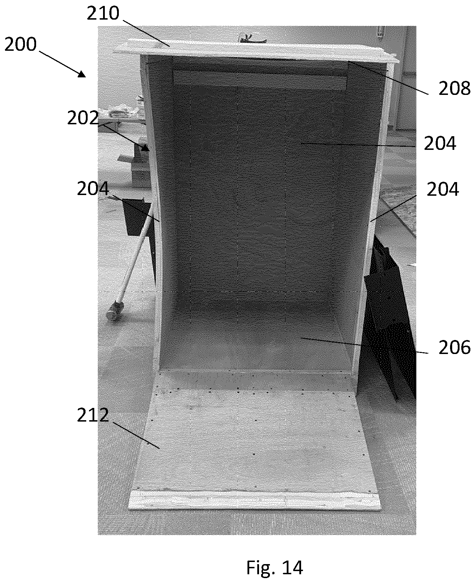

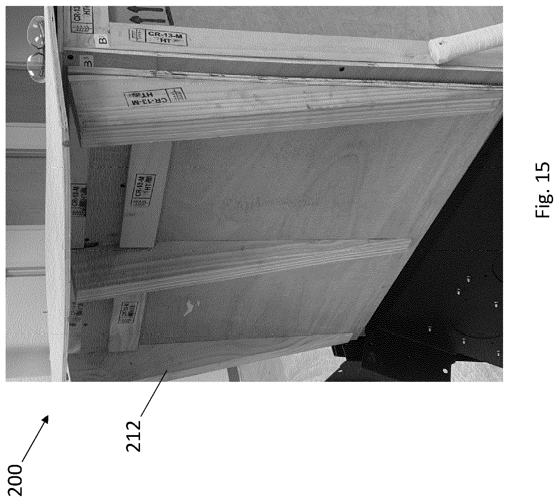

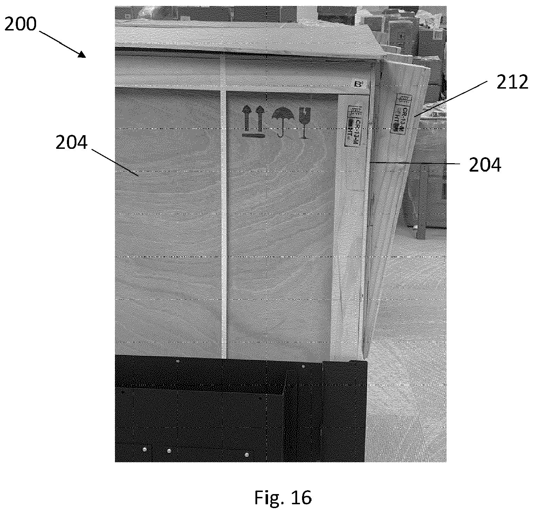

The footprint of power storage system 10 is designed to be easily transported and maneuvered. In some instances, components/features may be relocated to a different outer wall in order to accommodate the desired maneuverability and transportability. In other instances, components/features may be relocated to a different outer wall based on the desired electrical output of power storage system 10. Thus, various footprints of power storage system 10 may accommodate various rechargeable batteries 14 and therefore, various electrical outputs. The footprint refers to the outer dimensions of the entire system and, in some cases, components/features that may extend beyond the outer portions of body 18. In some embodiments, footprint may refer to the dimensions of base 16 of movable cart 12. In specific instances, the footprint of base 16 of movable cart 12 enables a plurality of power storage systems 10 to fit within existing transportation vehicles (e.g., van, truck). For example, the existing transportation vehicles may refer to vehicles used by production companies to deliver equipment to and from a production site. The transportability will be discussed in more detail below and with reference to Figs. 14-16.

Power storage system 10 may define various footprints in order to comply with storage or transportation criteria (e.g., to fit within existing transportation vehicles). In some instances, each footprint variation of power storage system 10 may share a dimension (or a multiple thereof) to comply with storage or transportation criteria to efficiently maximize storage/transportation space. For example, each footprint variation of power storage system 10 may share at least one of the following dimensions (or a multiple thereof), including width, length, or height, to comply with storage or transportation criteria. As used herein, "multiple" may refer to a dimension that can be multiplied or divided by the number of power storage systems 10 and will arrive at the original number, without a remainder. For example, if power storage system 10 has a width of 40 centimeters ("cm") (about 15.75 inches ("in")), a multiple thereof would be 10 cm (about 3.94 in). Therefore, four power storage systems 10 having a width of 10 cm (about 3.94 in) would fit within the space occupied by power storage system 10 having a width of 40 cm (about 15.75 in). In another example, a multiple of power storage system 10 having a width of 40 cm (about 15.75 in) is 80 cm (about 31.5 in). Therefore, power storage system 10 having a width of 80 cm (about 31.5 in) would occupy a space similar to two power storage systems 10 having a width of 40 cm (about 15.75 in).

In a non-limiting example, power storage system 10 may define a width of about 75 cm (about 29.53 in), a length of about 75 cm (about 29.53 in), and a height measured from a floor surface of about 125 cm (about 49.21 in). Base 16 of power storage system 10 may define a width of about 75 cm (about 29.53 in) and a length of about 75 cm (about 29.53 in). Wheels 32 may define a height of about 30 cm (about 11.81 in).

In another non-limiting example, power storage system 10 may define a width of about 75 cm (about 29.53 in), a length of about 120 cm (about 47.24 in), and a height measured from a floor surface of about 125 cm (about 49.21 in). Base 16 of power storage system 10 may define a width of about 75 cm (about 29.53 in) and a length of about 120 cm (about 47.24 in). Wheels 32 may define a height of about 30 cm (about 11.81 in).

In some instances, the footprint of power storage system 10 may relate to the power output and/or the quantity of rechargeable batteries 14. For example, power storage system 10 having one rechargeable battery 14 (see Fig. 2) may define a footprint of base 16 including a width of about 75 cm (about 29.53 in) and a length of about 75 cm (about 29.53 in). Power storage system 10 having two rechargeable batteries 14 (see Fig. 3) may define a footprint of base 16 including a width of about 75 cm (about 29.53 in) and a length of about 120 cm (about 47.24 in). It should be understood, however, that the width and length may be interchangeable, unless otherwise stated or inferred based on the context, without departing from the spirit/scope of this disclosure.

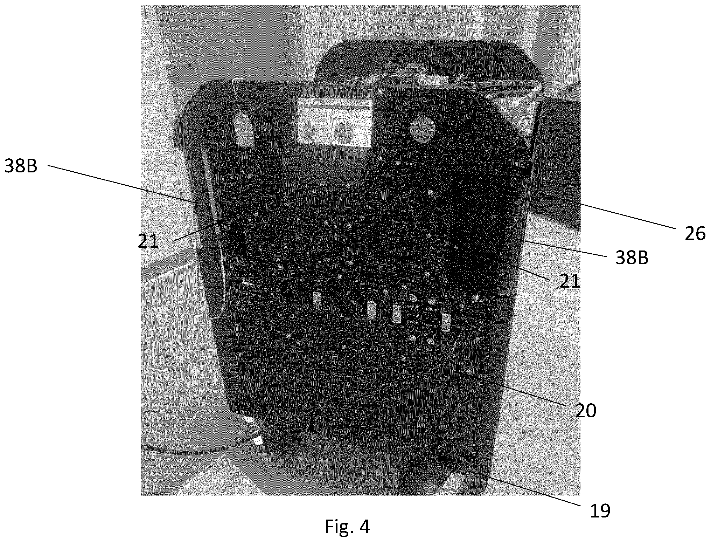

In one example, referring to Figs. 1, 4, and 5, front wall 20 may be the main interface between power storage system 10 and a user. For example, power storage system 10 may include power panel 102 and display 104. Power panel 102 and display 104 may be in electrical communication with electronic system 100. Power panel 102 may include at least one incoming and/or outgoing electrical receptacle. Display 104 may be configured to display various outputs of and/or related to power storage system 10. For example, display 104 may be configured to display output electrical conditions including, but not limited to, voltage, current, watts, power, battery power remaining, battery recharge time (e.g., estimated and/or actual), ambient temperature, internal temperature of power storage system 10, service messages, warnings, alerts, and the like. Display 104 may be configured to output electrical conditions as a percentage, as a quantity/amount, as a graph, as a table, and the like. Display 104 may be electrically connected to one or more features of power panel 102.

Power panel 102 may include at least one incoming and/or outgoing electrical receptacle. Power panel 102 may include a plurality of incoming and/or outgoing electrical receptacles. For example, power panel 102 may include at least one incoming receptacle configured to power and/or charge power storage system 10. At least one incoming receptacle may be either AC or DC. Incoming receptacle may include an electric vehicle (EV) charging connector. Power panel 102 may also include a plurality of outgoing receptacles, including but not limited to, DC receptacle (e.g., 48 VDC), AC receptacle, USB-A, USB-C, HDMI, stage pin connector, XLR connector, and related receptacles/connectors depending on specific field of use. Power storage system 10 may be configured to deliver a portion of and/or all of the output power to one or more of the plurality of outgoing receptacles. For example, one of the plurality of outgoing receptacles may receive all of the output power. In another example, the output power may be distributed across a plurality of outgoing receptacles. The distribution of the output power relative to the plurality of outgoing receptacles may be configured based on the equipment connected to the outgoing receptacle(s). The location, quantity and selection of the various receptacles may be selected based on a specific field of use. Referring to the AC receptacles for both incoming and outgoing, the AC receptacle may be selected based on the desired geographical area of use (e.g., United States, United Kingdom, Europe).

Power panel 102 may also include one or more circuit breakers in electrical communication with the various receptacles and electronic system 100. In some instances, at least one circuit breaker may be in electrical communication with at least one receptacle. Power panel 102 may include a main circuit breaker configured to control the main power to and/or from power storage system 10. The size and rating of the circuit breakers may be selected based on the incoming and/or outgoing power requirements of the specific receptacle(s). The circuit breakers may be selected from the group including, but not limited to, ELCI circuit breakers, GFCI circuit breakers, standard circuit breakers (e.g., single-pole and double-pole circuit breakers), AFCI circuit breakers, and combinations thereof.

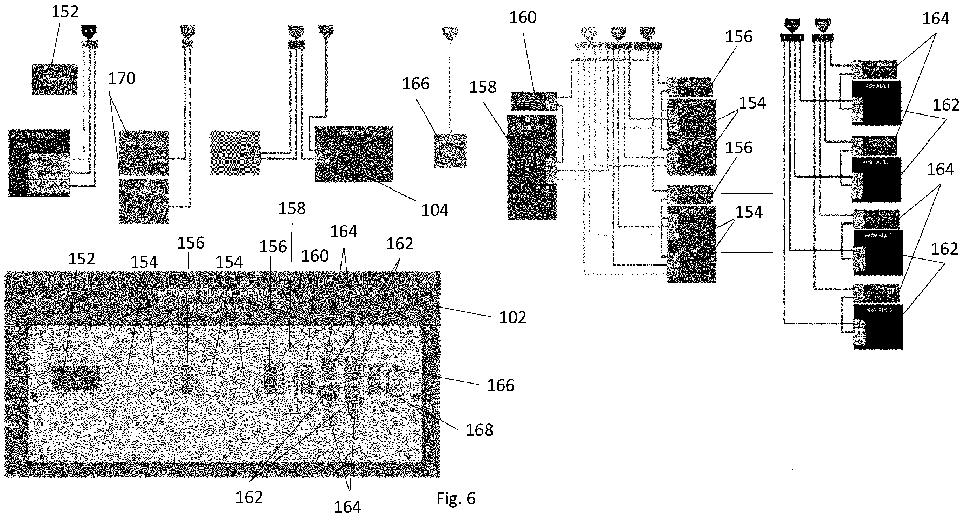

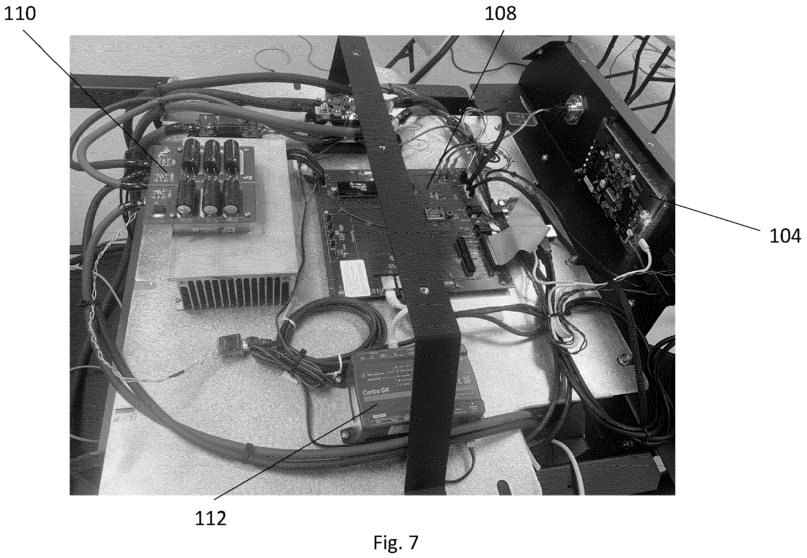

In an exemplary embodiment, Fig. 6 illustrates components physically (either directly or indirectly) and/or electrically connected to power panel 102. Power panel 102 includes input circuit breaker 152 in electrical communication with electronic system 100 and rechargeable battery 14. Input circuit breaker 152 may be selected from the group including, but not limited to, ELCI circuit breakers, GFCI circuit breakers, standard circuit breakers (e.g., single-pole and double-pole circuit breakers), AFCI circuit breakers, and combinations thereof. Power panel 102 also includes a plurality (e.g., four) of AC output receptacle 154 in electrical communication with at least electronic system 100. Each pair of AC output receptacles 154 is in electrical communication with AC output circuit breaker 156. In some embodiments, each AC output receptacle 154 may be in electrical communication with AC output circuit breaker 156. AC output circuit breaker 156 may be selected from the group including, but not limited to, ELCI circuit breakers, GFCI circuit breakers, standard circuit breakers (e.g., single-pole and double-pole circuit breakers), AFCI circuit breakers, and combinations thereof. Power panel 102 may also include stage pin connector 158 in electrical communication with at least electronic system 102. Stage pin connector 158 is in electrical communication with stage pin connector circuit breaker 160. Stage pin connector circuit breaker 160 may be selected from the group including, but not limited to, ELCI circuit breakers, GFCI circuit breakers, standard circuit breakers (e.g., single-pole and double-pole circuit breakers), AFCI circuit breakers, and combinations thereof. Power panel 102 may include a plurality (e.g., four) of DC output receptacles 162 in electrical communication with at least electronic system 100. Each DC output receptacle 162 is in electrical communication with DC output circuit breaker 164. DC output receptacle 162 may output about 48 volts. DC output circuit breaker 164 may be selected from the group including, but not limited to, ELCI circuit breakers, GFCI circuit breakers, standard circuit breakers (e.g., single-pole and double-pole circuit breakers), AFCI circuit breakers, and combinations thereof. Power panel 102 may include AC input receptacle 166 in electrical communication with at least electronic system 100 and rechargeable battery 14. AC input receptacle 166 may be configured to provide electricity to recharge rechargeable battery 14. AC input receptacle 166 may be in electrical communication with AC input circuit breaker 168. AC input circuit breaker 168 may be selected from the group including, but not limited to, ELCI circuit breakers, GFCI circuit breakers, standard circuit breakers (e.g., single-pole and double-pole circuit breakers), AFCI circuit breakers, and combinations thereof. Power panel 102 may include at least one USB connector 170 (e.g., USB-A, USB-C). USB connector 170 is in electrical communication with electronic system 100. Power panel 102 may include an HDMI connector (not shown) and/or an EV charging connector (not shown). As depicted in Fig. 7 in view of Figs. 2 and 3, electronic system 100 may be in electric communication with power panel 102, display 104, and rechargeable battery 14. Electronic system 100 may include at least one inverter 106, and main control board 108. Inverter 106 is configured to convert AC voltage to DC voltage and/or DC voltage to AC voltage. Inverter 106 may be configured to deliver an output power in pure sinewave. Main control board 108 may dictate which components within electronic system 100 are activated/deactivated, in accordance with a user's direction. Electronic system 100 may include DC module 110 which may be in electrical communication with main control board 108. DC module 110 may be configured to convert variable DC voltage from rechargeable battery 14 into a stable and consistent DC voltage. For example, DC module 110 may be configured to convert about 0% to about 100% capacity of the variable DC voltage from rechargeable battery 14 to a stable and consistent DC voltage of about 48 volts. The variable DC voltage may have a range of about 44 volts to about 58 volts. Electronic system 100 may include inverter board 112 which may be in electrical communication with main board 108 and inverter 106. Inverter board 112 may communicate between main control board 108 and inverter 106. Electronic system 100 may include a Wi-Fi transmitter and/or a Bluetooth° (registered by The Bluetooth Special Interest Group (SIG)) transmitter so as to send and/or receive information from/to another device (e.g., computer, cellphone). Electronic system 100 may be configured to accommodate a plurality of rechargeable batteries 14. In some cases, electronic system 100 requires minimal modification to accommodate a plurality of rechargeable batteries 14.

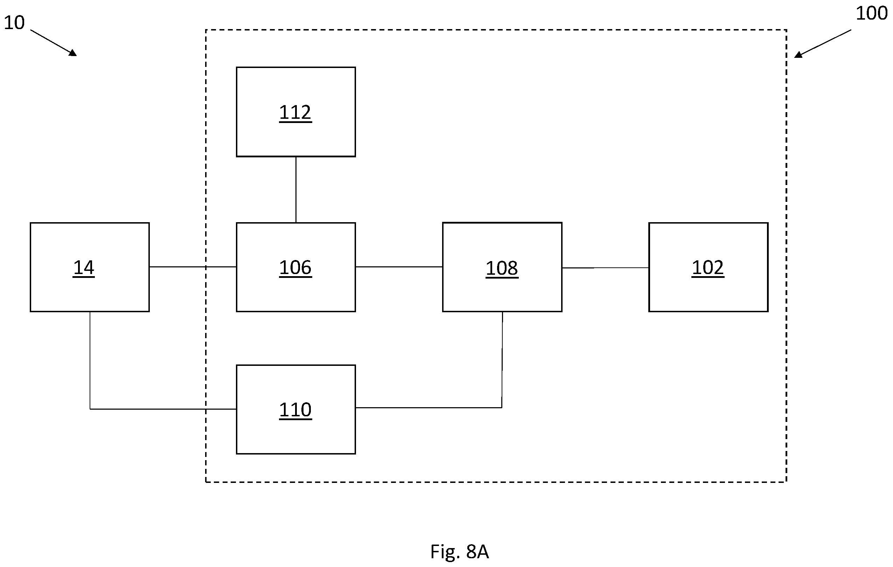

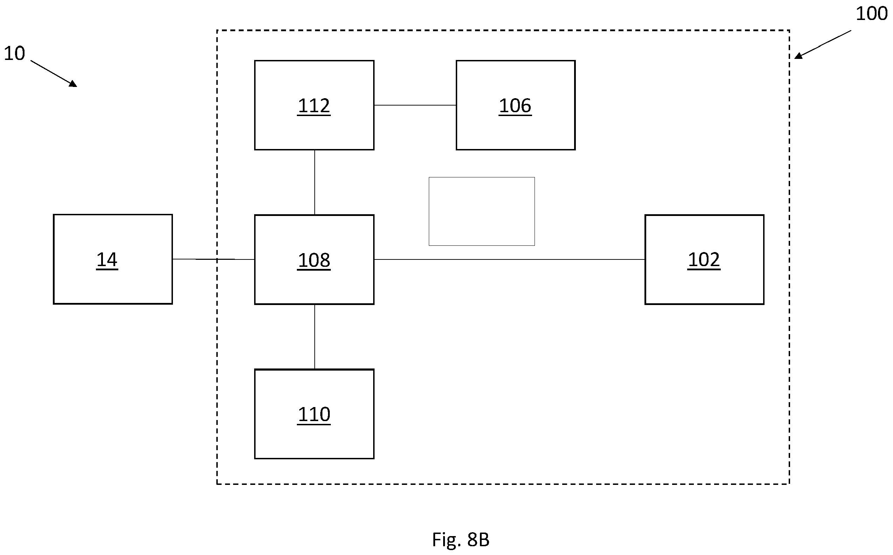

For example, Figs. 8A and 8B illustrate block diagrams of electronic system 100 (Fig. 7) of power storage system 10 Fig. 8A illustrates a power block diagram and Fig. 8B illustrates a signal block diagram of power storage system 10.

Referring to Fig. 8A, once powered, power storage system 10 may operate as illustrated. Rechargeable battery 14 may be in electrical communication with inverter 106 and DC module 110. Inverter 106 may receive DC voltage from rechargeable battery 14 and convert the DC voltage into AC voltage. DC module 110 may receive DC voltage from rechargeable battery 14 and deliver DC voltage to at least one DC voltage receptacle. Inverter 106 may be in electrical communication with inverter board 112, main control board 108, and power panel 102. Thus, power panel 102 may be configured to provide receptacles having AC voltage. DC module 110 may be in electrical communication with main control board 108 and power panel 102. Thus, power panel 102 may be configured to provide receptacles having DC voltage.

Referring to Fig. 8B, signal of power storage system 10 may travel as illustrated and may be displayed on display 104. Rechargeable battery 14 may be in signal communication with main control board 108. Main control board 108 may be in signal communication with DC module 110, inverter board 112, and power panel 102. Inverter board 112 may be in signal communication with inverter 106.

Power storage system 10 may include "smart" charging to charge the rechargeable battery 14. "Smart" charging may refer to management, monitoring and restriction of charging amounts based on a certain input. Electronic system 100 of power storage system 10 may be configured to detect an electrical condition of the charging input. For example, electronic system 100 may detect the inlet voltage that is used to charge the rechargeable batteries 14 and limit the current directed to the rechargeable batteries 14 based on the voltage detected. Doing so may maximize the current draw without overdrawing the system that the power storage system 10 is charging from. For example, if power storage system 10 is capable of drawing up to 30 amps, but the system that the power storage system 10 is charging from has a 20-amp circuit breaker, power storage system 10 can detect the 20-amp circuit breaker and limit the current draw to ensure the circuit breaker does not trip. Power storage system 10 may be configured to receive voltage between about 90 volts to about 260 volts. In yet another instance, power storage system 10 may be configured to connect to and charge from an electric vehicle (EV) charging station. Power storage system 10 may include an adapter and/or EV charging port to accommodate an EV charging station. Similarly, power storage system 10 may adjust the amount of current directed to the rechargeable batteries 14 based on the inlet voltage from the EV charging station.

Power storage system 10 may include a secondary battery that is separate from rechargeable battery 14. The secondary battery (not shown) may operate at least a portion of the electronic system 100. For example, when rechargeable battery 14 is at or near depletion, secondary battery may indicate the battery 14 storage amount to the user (e.g., via display 104). Additionally, secondary battery may operate the Wi-Fi transmitter and/or Bluetooth° (registered by The Bluetooth Special Interest Group (SIG)) transmitter so as to send and/or receive information from/to another device (e.g., computer, cellphone). Power storage system 10 may utilize the secondary battery to provide power to the rechargeable battery 14 (e.g., a trickle charge). Doing so may enable rechargeable battery 14 from shutting down for an extra period of time beyond its normal runtime.

In some embodiments, the secondary battery may operate a heater (not shown) to keep components within the system 10 warm. For example, the heater may be external to rechargeable battery 14 to maintain the internal temperature of power storage system 10 at a desired temperature. In other instances, the secondary battery may operate a heater within rechargeable battery 14 so as to ensure battery 14 maintains a desired temperature. In one example, sodium-based batteries require the sodium to maintain a certain temperature level before operating and/or charging. Thus, to reduce downtime between charges, for example, the secondary battery may operate a heater within the rechargeable battery 14 to keep the sodium at or near molten levels.

In yet another embodiment, power storage system 10 may include features to keep rechargeable batteries 14 warm without relying on a secondary battery. For example, power storage system 10 may reserve extra power to maintain electronic system 100 and/or operate a heater (internal to and/or external to battery 14). In one example, a 9kWh system may include an additional amount of power in reserve above the 9kWh, which is the amount provided to a user for use. For example, power storage system 10 may reserve up to about 25% in additional power above the displayed user power (e.g., 9kWh). In other examples, power storage system 10 may reserve up to about 10% in additional power. In yet another example, power storage system 10 may reserve up to about 5% in additional power. In yet another example, power storage system 10 may reserve a fixed amount regardless of the output power. For example, power storage system 10 may reserve about 1.2 kWh in additional power above the displayed user power (e.g., 9kWh).

Power storage system 10 may include features/components to direct air through at least a portion of movable cart 12. For example, power storage system 10 may include at least one fan to draw air within and/or push air out from movable cart 12. In some instances, power storage system 10 may include at least one inlet fan configured to draw air within movable cart 12 from the environment external to body 18 and at least one outlet fan configured to push air from within movable cart 12 to the environment external to body 18. In some cases, inlet and outlet fans may be oppositely positioned on either side of electronic system 100 and/or battery 14. Inlet and outlet fans may be oppositely positioned on either side of inverter 106. The inlet fans may be configured to direct external air into the inlet side of inverter 106 and outlet fans may be configured to direct internal air towards the exterior of body 18. Doing so may limit the frequency the fans internal to the inverter 106 may have to operate. The quantity of inlet and outlet fans may depend on the desired operating temperature internal to power storage system 10. In some examples, about four (4) inlet fans and about four (4) outlet fans may be utilized. In other examples, about two (2) inlet fans and about two (2) outlet fans may be utilized.

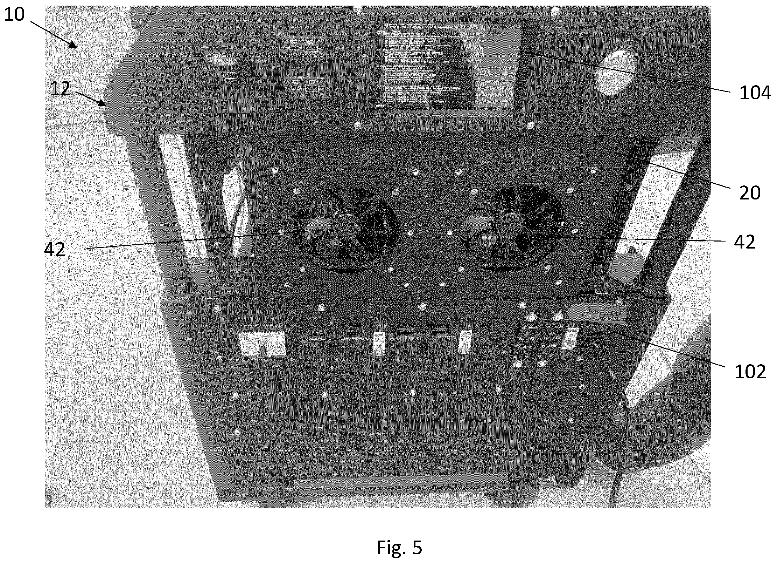

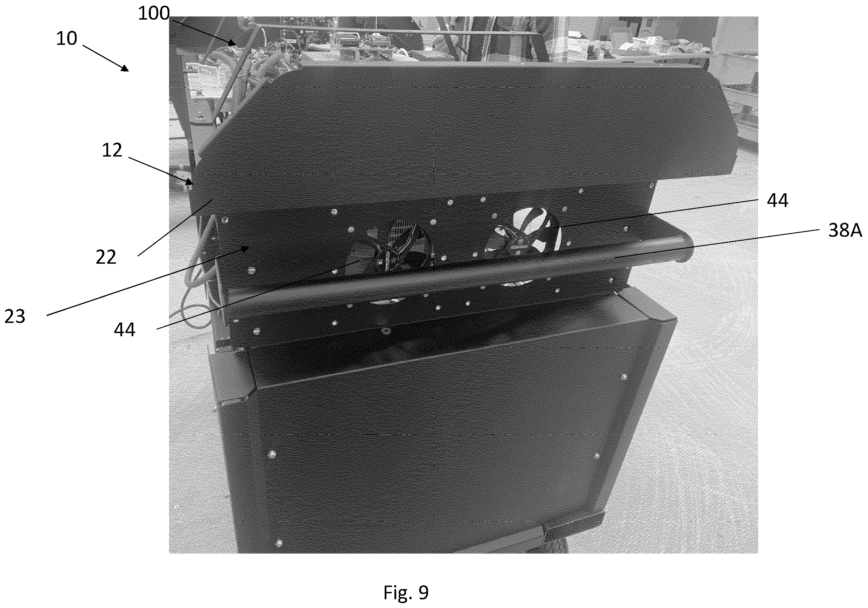

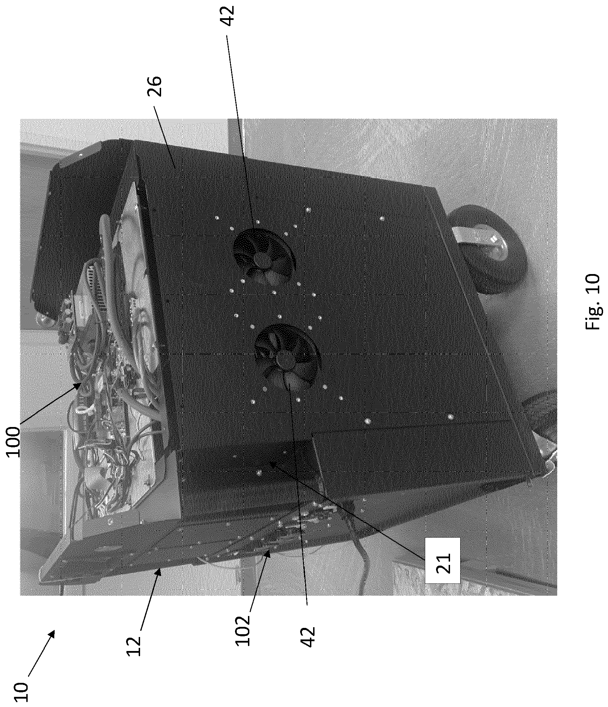

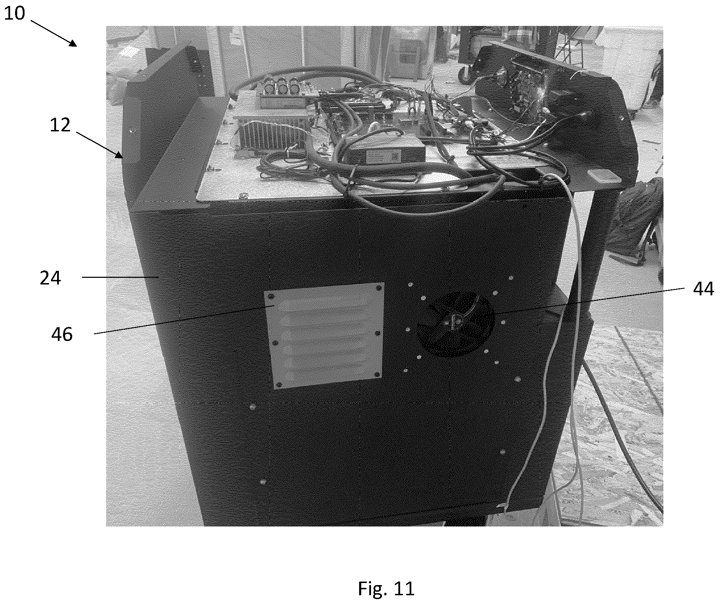

Referring to Figs. 5 and 9-11, power storage system 10 may include at least two inlet fans 42 and at least two outlet fans 44 positioned opposite to the at least two inlet fans 42. Inlet and outlet fans 42, 44 may be positioned on various outer walls of body 18, depending on orientation of electronic system 100 (e.g., the orientation of inverter 106). For example, in a two rechargeable battery 14 system (Figs. 5 and 9), inlet fans 42 may be mounted with respect to front wall 20 and outlet fans 44 may be mounted with respect to back wall 22. In another example, in a single rechargeable battery 14 system (Figs. 10 and 11), inlet fans 42 may be mounted with respect right sidewall 26 and outlet fans 44 may be mounted with respect to left sidewall 24. It should be understood, however, that the orientation of electronic system 100 and/or battery 14 may be adjusted in any of the power storage systems 10 and as such, the location of the fans 42, 44 may be changed, without departing from the spirit/scope of this disclosure. Louver 46 may be mounted with respect to fans 42, 44. Louver 46 may protect fans 42, 44 from unwanted debris and/or animals/insects. Louver 46 may include a screen (not shown) to further protect fans 42, 44. In some examples, each fan 42, 44 may include a louver 46 mounted with respect thereto.

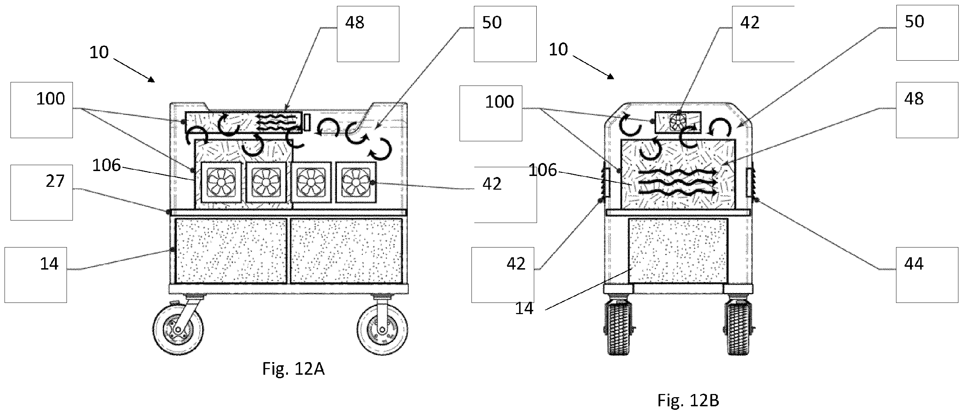

In operation, Figs. 12A and 12B illustrate the air movement across electronic system 100. As noted above, the quantity of inlet fans 42 and outlet fans 44 may depend on a variety of conditions, including the number of batteries, the desired internal operating temperature, the external operating conditions, and combinations thereof. In Figs. 12A and 12B, power storage system 10 includes two rechargeable batteries 14 and two sets of inlet and outlet fans 42, 44. Fig. 12A illustrates a side view of the air movement across the upper portion of power storage system 10. Reference number 48 indicates the direct air flow across, in this case the plurality of electrical boards/wires of electronic system 100, from either front wall 20 to back wall 22 and/or back wall 22 to front wall 20. The orientation may depend on the layout of the electronic system 100. Reference number 50 indicates turbulent air flow produced within power storage system 10 as a result of direct air flow 48 from fans 42, 44 contacting the various components and features of power storage system 10. Additionally, and as illustrated in Fig. 12B, direct air flow 48 may pass over and/or through inverter 106, originating from inlet fan 42 towards outlet fan 44. Turbulent air flow 50 may occur as a result of the direct air flow 48 contacting the various components and features of power storage system 10.

In some embodiments, power storage system 10 may be configured to recapture and/or redirect warm air towards rechargeable battery 14 and/or electronic system 100. Warm air may originate from anywhere within power storage system 10 and/or from the environment outside of power storage system 10. In some instances, additional heat may be required to enable electronic system 100 and/or rechargeable battery 14 to operate more efficiently. It is also understood that a result of electrical work is heat. Thus, features/elements within power storage system 10 may redirect and/or recapture the resultant heat and direct the heat, either directly or indirectly, as needed. In one example, internal fans (not shown) may be strategically positioned to redirect heat towards electronic system 100 and/or rechargeable battery 14. In another example, at least one heat sink may be strategically positioned to capture heat. To deliver the heat to electronic system 100 and/or rechargeable battery 14, at least one fan may be positioned to blow air over the heat sink and thus push warmer air in the direction of electronic system 100 and/or rechargeable battery 14. In combination with the above, body 18 of power storage system 10 may further include features/elements to aid in directing the warm air towards electronic system 100 and/or rechargeable battery 14.

In one example, barrier 27 of body 18 may isolate rechargeable battery 14 from the rest of the system to capture heat generated by rechargeable battery 14. Doing so may heat the area surrounding rechargeable battery 14 and thus warm rechargeable battery 14. Barrier 27 may also remove rechargeable battery 14 from direct air flow 48 (see Figs. 12A and 12B) to ensure that rechargeable battery 14 is not cooled by fans 42, 44.

In one example, sodium-based batteries require the sodium to maintain a certain temperature level before operating and/or charging. Thus, to reduce downtime between charges, for example, warm air may be redirected towards rechargeable battery 14 to keep the sodium at or near molten levels, as discussed above.

In an exemplary embodiment, power storage system 10 may include at least one rechargeable battery 14 and electronic system 100. In the below examples, the rechargeable battery 14 may be a sodium-based battery. Power storage system 10 may include one sodium-based rechargeable battery 14 having an output power of about 9kWh. Power storage system 10 may include two sodium-based rechargeable batteries 14 having an output power of about 18kWh. The above examples may include the components and features described herein.

Power storage system 10 may operate at a decibel level of less than about 50 decibels. In some instances, power storage system 10 may operate at a decibel level of less than about 30 decibels. In other instances, power storage system 10 may operate at a decibel level of less than about 20 decibels. Due to its quiet nature, power storage system 10 may be placed in close proximity to a user and/or a user's equipment (e.g., production equipment). without concern over hearing loss due to extended operation and/or providing noise pollution to the area. Doing so would also save the user money by reducing the amount of cabling and equipment required to set up a power system further away from the user and/or user's equipment. For example, power storage system 10 may be positioned within about 200 feet relative to a user and/or a user's equipment (e.g., production equipment). Particularly, power storage system 10 may be positioned within about 100 feet relative to a user and/or a user's equipment (e.g., production equipment). Even more particularly, power storage system 10 may be positioned within about 10 feet relative to a user and/or a user's equipment (e.g., production equipment). Even more particularly, Even more particularly, power storage system 10 may be positioned within about 1 foot relative to a user and/or a user's equipment (e.g., production equipment).

Power storage system 10 as described herein is configured to provide sustainable energy in a wide range of environments. Power storage system 10 may be operated in environments having temperatures between about -20 degrees Celsius and about 60 degrees Celsius. Power storage system 10 has a minimal carbon footprint in comparison to current fossil fuel-based generators. Depending on the choice of rechargeable batteries 14, the carbon footprint may be further reduced. For example, sodium-based batteries may have a lower carbon footprint than lead-acid batteries.

Power storage system 10 may be set up within minutes due to its compact and turnkey nature. For example, the set up and use of power storage system 10 with a piece of equipment may be as simple as electrically connecting the piece of equipment to power storage system 10 and providing power to the piece of equipment so that the piece of equipment is capable of being operated.

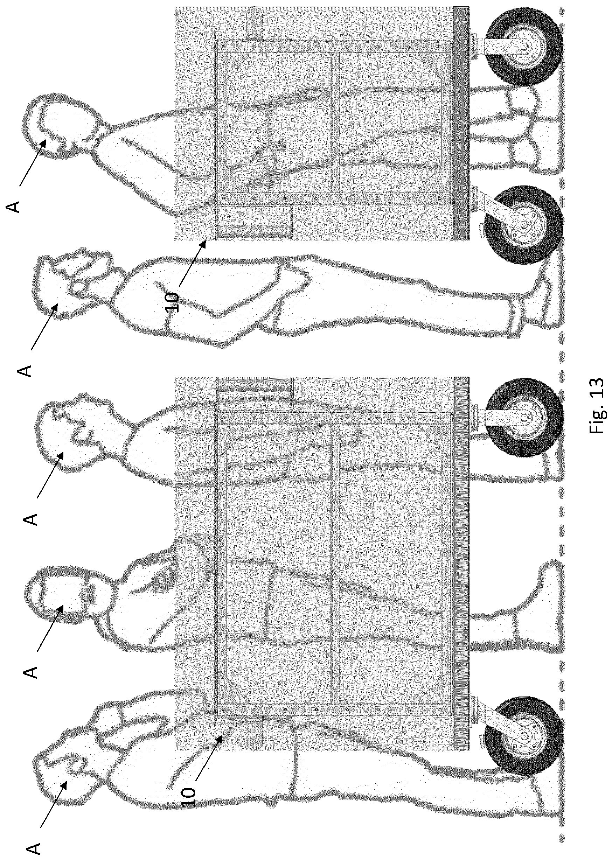

In an exemplary embodiment, power storage system 10 may be sized for ease of use and maneuverability within a variety of conditions. For example, loading and unloading from the distribution vehicle, maneuvering on uneven ground, and/or maneuvering on an incline or decline. Referring to Fig. 13, power storage system 10 may be sized at roughly the same height with different lengths, depending on the electrical output requirements. The persons in the background (reference letter A) are persons of average height. It should be understood that the comparison is merely for illustrative purposes and may be adjusted to meet a desired environment.

In exemplary embodiments, power storage system 10 may fit within existing transportation networks. For example, production companies include a vast network of distribution vehicles to deliver equipment to and from a production site. The distribution vehicles are well accepted within the industry and are similarly sized. Power storage system 10 may be sized to easily fit within the distribution vehicle. For example, the 9kWh and 18kWh power storage systems 10 may be sized to fit within the distribution vehicles.

During shipment, power storage system 10 may be placed within storage box assembly 200 (Figs. 14-16). Storage box assembly 200 may include storage box 202 defining sidewalls 204, base 206, top 208, and cover 210. Storage box assembly 200 may also include ramp 212. During shipment, ramp 212 may be attached to an outer portion of storage box 202 (e.g., sidewall 204). When needed, ramp 212 may be placed in front of open storage box 202 to allow for ease of installation and removal of power storage system 10 into storage box 202. Storage box 202 may also include tiedown locations to secure power storage system 10. Storage box 202 may be sized to fit the specific power storage system 10. Storage box assembly 200 may be manufactured from wood, metal, plastic, and combinations thereof.

### EXAMPLE 1

An exemplary use of power storage system 10 will now be described. Power storage system 10, as described herein, is configured to provide portable, clean, and sustainable on-demand power to a user (e.g., a production company on a production site). Using a production site as an example, at least one power storage system 10 may be loaded onto an existing transportation vehicle. The transportation vehicle may deliver the at least one power storage system 10 to the production site and the power storage system 10 may be unloaded. Once at the production site, power storage system 10 can be wheeled to a desired area and a piece of equipment (e.g., camera, light, laptop, cellphone) can be electrically connected to the desired electrical receptacle/connector and become operable for use. Once connected, a user can monitor using display 104 the performance of power storage system 10 and/or the equipment connected to it. For example, a user can monitor output electrical conditions including, but not limited to, voltage, current, watts, power, battery power remaining, ambient temperature, internal temperature of power storage system 10, service messages, warnings, alerts, and the like. At the end of use, production storage system 10 may be connected to a power source to charge rechargeable battery 14 for future uses. A user can monitor, among other conditions, battery recharge time (e.g., estimated and/or actual) via at least display 104.

While the invention has been described with reference to preferred embodiments, it will be understood by those skilled in the art that various changes may be made, and equivalents may be substituted for the elements thereof without departing from the scope of the invention. In addition, many modifications may be made to adapt the teaching of the invention to particular use, application, manufacturing conditions, use conditions, composition, medium, size, and/or materials without departing from the essential scope and spirit of the invention. Therefore, it is intended that the invention is not limited to the exemplary embodiments and best mode contemplated for carrying out this invention as described herein. Since many modifications, variations, and changes in detail can be made to the described examples, it is intended that all matters in the preceding description and shown in the accompanying figures be interpreted as illustrative and not in a limiting sense.

## Claims

1. A power storage system (10) comprising:
a movable cart (12);
a rechargeable battery (14) selected from the group consisting of a sodium-based battery, lithium-ion battery, lead-acid battery, nickel-cadmium battery, nickel-metal hydride battery, and combinations thereof; and
an electronic system (100) including at least one output electrical receptacle and at least one input electrical receptacle in electrical communication with the rechargeable battery (14),
wherein the rechargeable battery (14) and the electronic system (100) are mounted with respect to the movable cart (12).

2. The power storage system (10) of claim 1, wherein the electronic system (100) comprises:
a power supply electrically connected to a power inlet (166) and to the rechargeable battery (14), the power supply configured to recharge the rechargeable battery (14);
a DC module (110) electrically connected to the rechargeable battery (14) and a DC power outlet (162);
an AC inverter (106) electrically connected to the rechargeable battery (14) and an AC power outlet (154), the AC inverter (106) configured to convert DC voltage to AC voltage; and,
a controller (108) connected to at least the power supply, the DC module (110), the AC inverter (106), and the rechargeable battery (14).

3. The power storage system (10) of claim 1 or claim 2, wherein the movable cart (12) further comprises:
a base (16), a plurality of sidewalls (20, 22, 24, 26) mounted vertically with respect to the base (16), a lid (28) mounted with respect to the plurality of sidewalls (20, 22, 24, 26), a set of wheels (32) mounted with respect to the base (16), and at least one handle (38A, 38B) mounted with respect to at least one of the plurality of sidewalls (20, 22, 24, 26); and
a display screen (104) in electrical communication with at least the electronic system (100),
wherein the rechargeable battery (14), the electronic system (100), and the display screen (104) are mounted with respect to the movable cart (12).

4. The power storage system (10) of any of claims 1 to 3, wherein the movable cart (12) is configurable to receive at least two rechargeable battery systems (14).

5. The power storage system (10) of any of claim 1 to 4, wherein the movable cart (12) further comprises two louvers (46) and at least one fan (42, 44), wherein the louvers (46) are oppositely positioned and the at least one fan (42, 44) is positioned between the two louvers (46).

6. The power storage system (10) of any of claims 1 to 5, wherein the sodium-based battery (14) is selected from the group consisting of a molten sodium battery (14) and a sodium-ion battery (14).

7. The power storage system (10) of any of claims 1 to 6, wherein the movable cart (12) has a footprint that is configured to be received by an existing transportation vehicle, wherein the movable cart (12) defines a width of about 75 centimeters (about 29.53 inches).

8. The power storage system (10) of any of claims 1 to 7, wherein the movable cart (12) further comprises at least one of a heat sink and/or a fan that is selectively positioned to capture and/or direct heat relative to the rechargeable battery (14).

9. The power storage system (10) of any of claims 1 to 8, wherein the at least one output electrical receptacle is selected from the group consisting of a DC receptacle (162), an AC receptacle (154), a USB-A (170), a USB-C (170), an HDMI, a stage pin connector (158), an XLR connector, and combinations thereof.

10. The power storage system (10) of any of claims 1 to 9, wherein the at least one input electrical receptacle is selected from the group consisting of a DC receptacle, an AC receptacle (166), an electric vehicle charging connector, and combinations thereof.

11. A storage box assembly (200) for a power storage system (10) as claimed in any of claims 1 to 10, the power storage system (10) further comprising a set of wheels (32), the storage box assembly comprising:
a base (206), a plurality of sidewalls (204) mounted vertically with respect to the base (206), and a cover (210) mounted with respect to the plurality of sidewalls (204), thereby defining a storage box (202) having an open volume, wherein at least one of the plurality of sidewalls (204) is removable; and
a ramp (212) positionable between:
a) an area relative to at least one of the plurality of sidewalls (204), and
b) to an area relative to the removable sidewall (204),
wherein the power storage system (10) of claim 1 may be loaded and/or unloaded into/from the open volume of the storage box (202) using the ramp (212),
wherein the loaded power storage system (10) of claim 1 may be closed within the storage box (202) by the removable sidewall (204) and the ramp (212) is mounted with respect to at least one of the plurality of sidewalls (204).

12. A production equipment assembly, comprising:
a power storage system (10) according to any of claims 1 to 10; and
a production equipment, wherein the production equipment is electrically powered by the power storage system (10),
wherein the power storage system (10) is positioned within about 200 feet (~61m) relative to the production equipment.

13. The production equipment assembly of claim 12, wherein the power storage system (10) is positioned within about 10 feet (~3m) relative to the production equipment.

14. A method of setting up and operating a production equipment, the method comprising:
electrically connecting the production equipment to a power storage system (10) according to any of claims 1 to 10; and
providing power to the production equipment such that the production equipment is capable of being operated.

15. A power storage system (10) as claimed in claim 1 comprising:
a movable cart (12) comprising:
a) a base (16),
b) a plurality of sidewalls (20, 22, 24, 26) mounted vertically with respect to the base (16),
c) a lid (28) mounted with respect to the plurality of sidewalls (20, 22, 24, 26),
d) a first pair of wheels (32) positioned along a first axis (36) and mounted with respect to the base (16),
e) a second pair of wheels (32) positioned along a second axis (36) and mounted with respect to the base (16) and opposite from the first pair of wheels (32),
f) a horizonal handle (38A) mounted with respect to one of the plurality of sidewalls (20, 22, 24, 26), and
g) two vertical handles (38B) mounted with respect to at least one of the plurality of sidewalls (20, 22, 24, 26) and opposite from the horizontal handle (38A);
a sodium-based battery (14) mounted with respect to the base (16) of the movable cart (12); and
an electronic system (100) including at least one input electrical receptacle and at least one output receptacle mounted with respect to the movable cart (12) and in electrical communication with the sodium-based battery (14), the electronic system (100) further comprising:
a) a power supply electrically connected to a power inlet (166) and to the sodium-based battery (14), the power supply configured to recharge the sodium-based battery (14),
b) a DC module (110) electrically connected to the sodium-based battery (14);
c) an AC inverter (106) electrically connected to the sodium-based battery (14), the AC inverter (106) configured to convert DC voltage to AC voltage,
d) a controller (108) connected to at least the power supply, the DC module (110), the AC inverter (106), and the sodium-based battery (14), and
e) a display screen (104) electrically connected to the controller (108) and configured to display at least one electrical characteristic of the system (10)
optionally
wherein the at least one output electrical receptacle is selected from the group consisting of a DC receptacle (162), an AC receptacle (154), a USB-A (170), a USB-C (170), an HDMI, a stage pin connector, an XLR connector, and combinations thereof
and/or
wherein the at least one input electrical receptacle is selected from the group consisting of a DC receptacle, an AC receptacle (166), an electric vehicle charging connector, and combinations thereof.
